# EUROPEAN PATENT APPLICATION

(11) **EP 3 975 448 A1**
(43) Date of publication of application: **30.03.2022**
(21) Application number: 20198719.5
(22) Date of filing: 28.09.2020
(51) Int. Cl.: H04B 7/185

(54) **A WIRELESS COMMUNICATION INFRASTRUCTURE SYSTEM**

(71) Applicant: Siemens Aktiengesellschaft, 80333 München (DE)
(72) Inventor: Kloiber, Bernhard, 83620 Feldkirchen-Westerham (DE); Michailow, Nicola, 81825 München (DE); Chorppath, Anil Kumar, 76187 Karlsruhe (DE); Kornbichler, Andreas, 83623 Dietramszell (DE); Scheffel, Matthias, 82008 Unterhaching (DE)

(57) **Abstract**

Embodiments generally involve a wireless communication infrastructure system for providing wireless access to a user equipment in an environment. At least one docking module is disposed on a structure, providing a second docking interface configured to detachably engage the first docking interface of one of the robotic units, thereby permitting a unit to be selectively engaged with and disengaged from the docking module. At least one robotic unit is including a first docking interface to engage the robotic unit with the second docking interface or to disengage the robotic unit from the second docking interface of the docking module. The robotic unit includes a radio access node for wirelessly communicating with one or more items of user equipment. According to an embodiment, the robotic unit is configured to navigate at least substantially autonomously within the environment. Advantageously, the wireless communication infrastructure system may be quickly deployed, redeployed or maintained. Radio access nodes according to the embodiments allow for an installation and exchange literally on the fly by automatically or even autonomously undocking a robotic unit and docking a new robotic unit. Staff deployment is reduced to a minimum. The proposed embodiments advantageously allow a rapid adaption of the wireless communication infrastructure system to changing radio propagation conditions as well as modifications in wireless coverage requirements.

## Description

### TECHNICAL FIELD

Embodiments described herein generally relate to the field of wireless communications, and more particularly to a Radio Access Network of a wireless communications system.

### BACKGROUND

Factories of the future encounter a growing data traffic among industrial devices. Wireless technologies for exchanging data penetrate industrial plant environments due to the advantages that these technologies possess over wired solutions. To that end, ubiquitous wireless network coverage within industrial environments is paramount.

Communication in broadband wireless networks is divided between a fronthaul or access section and a backhaul section. A Radio Access Network, known as RAN, is an air interface network providing wireless communication between user equipment - which are also referred to as wireless clients, mobile terminals, subscribers etc. - and their associated access node - which are also referred to as radio access nodes, access points, base stations, etc. - while the backhaul section is a network providing traffic communication between the various access points and a core network.

RANs have progressed through several different generations of technology and are sometimes referred to by a generation index such as 3G, or 4G for third or fourth generation networks. An example 4G network is a Long-Term Evolution or LTE network. Access nodes in LTE - or above 4G wireless networks - can include a RAN Node such as a Node B (also commonly denoted as evolved Node B, enhanced Node B, eNodeB, or eNB) and/or Radio Network Controller or RNC. In fifth generation or 5G wireless networks, Access nodes can include a 5G Node, e.g., 5G eNB or gNB. The access nodes communicate with wireless user equipment, which is commonly referred to as user equipment or UE.

Although a wireless communication infrastructure promises a flexible data exchange within premises such as industrial shop floors, a deployment of this infrastructure suffers from undesirable limitations.

To date, infrastructure elements such as base stations, access points, antennas are permanently installed at installation positions on a ceiling or a wall of premises. At the time of installation, these installation positions have been planned to provide for an optimal radio signal coverage throughout the premises. Over time, however, an environment inside the premises may change. Particularly, partitions or compartments of industrial plants may be altered. Repartitioning of a plant may inevitably lead to a necessity of modifying the wireless communication infrastructure at high costs.

Further on, industrial environments are challenging when compared with other environments as they are dominated by metal objects such as production machines, storage racks, materials, and vehicles. These objects impair radio propagation and may create coverage holes unpredictable at installation time of the wireless communication infrastructure. These and other local impairments of the wireless network quality within the wireless communication environment may unpredictably impair a usability of the infrastructure system.

Still further, manufacturing processes are evolving towards flexible modular production down to a lot size of one. Such flexible manufacturing processes require flexible assembly areas and, consequently, spatial and organizational changes in the plant. Accordingly, these processes require permanent re-configuration of the wireless communication environment.

Accordingly, there is a need in the art to facilitate a more flexible deployment of a wireless communication infrastructure allowing for modifications without major personnel deployments or interruption of plant operations.

### SUMMARY

Embodiments described herein generally involve a wireless communication infrastructure system for providing wireless access to a user equipment in an environment.

In one embodiment, the wireless communication infrastructure system comprises a structure mounted on a substantially planar surface. At least one docking module is disposed on the structure, providing a second docking interface configured to detachably engage the first docking interface of one of the robotic units, thereby permitting a unit to be selectively engaged with and disengaged from the docking module.

According to an embodiment, at least one robotic unit is including a first docking interface to engage the robotic unit with the second docking interface or to disengage the robotic unit from the second docking interface of the docking module.

According to an embodiment, the robotic unit includes a radio access node for wirelessly communicating with one or more items of user equipment. Alternatively, the robotic unit itself may be organized as a robotic radio access node for wirelessly communicating with one or more items of user equipment.

According to an embodiment, the robotic unit is configured to navigate at least substantially autonomously within the environment.

Advantageously, the wireless communication infrastructure system may be quickly deployed, re-deployed or maintained, in the latter case e.g. on occurrence of a failure in a robotic unit. While traditionally known radio access nodes (e.g. base stations or access points) require high installation efforts for deployment and re-deployment, radio access nodes according to the embodiments allow for an installation and exchange literally on the fly - when using unmanned aerial vehicles - by automatically or even autonomously undocking a robotic unit and docking a new robotic unit. Staff deployment is reduced to a minimum.

The proposed embodiments advantageously allow a rapid adaption of the wireless communication infrastructure system to changing radio propagation conditions as well as modifications in wireless coverage requirements. The rapid adaption is particularly supported by the possibility of the proposed embodiments for:
- adding robotic units;
- removing robotic units, particularly removing redundant robotic units;
- relocating robotic units, particularly for the purpose of optimizing a desired radio coverage by position one or more robotic units according to an hour of day, day of month, month of year etc. or as a reaction on spontaneous and/or rare events, e.g. failures in the communication infrastructure and;
- swapping robotic units, particularly for the purpose of optimizing radio coverage for robotic units having different antenna characteristics.

### BRIEF DESCRIPTION OF THE DRAWING

The objects as well as further advantages of the present invention will become more apparent and readily appreciated from the following description of the preferred embodiments, taken in conjunction with the accompanying drawing of which:
- FIG. 1: shows a robotic unit in vicinity of a docking interface according to an embodiment;
- FIG. 2: shows a simplified top view of a wireless communication infrastructure system according to an embodiment;
- FIG. 3: shows a perspective view of the wireless communication infrastructure system according to an embodiment; and;
- FIG. 4: shows a graphical representation of a logic layer model of a next generation wireless communication architecture.

It will be appreciated that for simplicity and clarity of illustration, elements shown in the figures have not necessarily been drawn to scale. Like reference signs generally indicate identical, functionally similar, and/or structurally similar elements.

### DETAILED DESCRIPTION

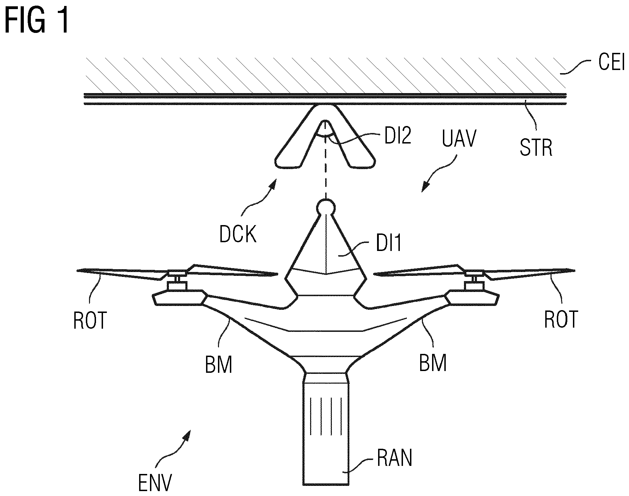

Referring to FIG. 1, a section of an environment ENV closed to a ceiling CEI is shown. A structure STR is mounted on the room-side surface of the ceiling CEI. A docking module DCK is disposed or mounted on the structure STR and providing a second docking interface DI2. The second docking interface DI2 includes a male or a female connector structure which has one or more surfaces for supporting a counterpart docking interface.

The second docking interface DI2 may include incorporated capture and/or locking mechanisms, which slide in guiding slots. The receiving structure or cradle may house alignment mechanisms for repositioning the counterpart docking interface in the cradle after docking.

In some examples, a clamping mechanism may be arranged to retain the counterpart docking interface in place on the second docking interface DI2. Alternatively or additionally, one or more reversibly lockable clamps may be arranged for seating and securing the counterpart docking interface in the cradle of the second docking interface DI2 when the counterpart docking interface is docked.

In one embodiment, one or more latches - not shown - may be arranged to latch the counterpart docking interface to the second docking interface DI2 and/or to latch the second docking interface DI2 to the counterpart docking interface. The at least one latch may be arranged to be automatically engaged upon coupling of the second docking interface DI2 and the counterpart docking interface. The at least one latch may be arranged to be automatically disengaged upon decoupling.

In vicinity of the docking module DCK a robotic unit, in this embodiment designed as an unmanned aerial vehicle UAV is shown hovering in the environment ENV.

In some embodiments, the unmanned aerial vehicle UAV has four booms BM whereby only two booms BM are visible in the drawing due to the side view. Some or each boom BM may be mounted with one or more motors for driving at least one rotor ROT. The unmanned aerial vehicle UAV may be configured to navigate autonomously or at least substantially autonomously within the environment ENV.

The environment ENV in which the robotic units - or more specifically: the unmanned aerial vehicles UAV - are operated may comprise both, indoor and outdoor environments, including environments such as industrial environments, office environments, hospital environments, residential building environments or public outdoor environments such as trade fair sites, construction sites, public transport sites and or coastal regions such as offshore sites.

The robotic units within the environment may include vehicles - preferably automated guided vehicles or AGV - or aerial vehicles such unpiloted aircraft, also referred to as unmanned aerial vehicles UAV as in the present embodiment depicted by FIG. 1.

While such unmanned aerial vehicles UAV are advantageously used as robotic units for the case that the structure is mounted on a ceiling, wheeled vehicles may be more advantageously used as robotic units for the case that the structure STR is mounted in between a raised panel floor or a false floor that is supported above an existing floor.

In some examples, a navigating or hovering unmanned aerial vehicle UAV may be in communication with the docking modules DCK via a wireless data connection. In some examples, one or more central or decentral control units - not shown - may be in constant or temporary communication with one or more unmanned aerial vehicles UAV via a wireless data connection or via a cellular, radio frequency, or other suitably long-range wireless connection. In other examples, the central control may be in communication with the unmanned aerial vehicles UAV when they are on - or in sufficient proximity to - a docking module DCK.

In some examples, a wireless communication infrastructure deployment or re-deployment is organized by merely selecting docking modules DCK to which unmanned aerial vehicle UAV are to be docked. The unmanned aerial vehicle UAV then autonomously and automatically move, attach and dock to the assigned docking modules DCK.

In general, a degree of autonomy assigned to the unmanned aerial vehicle UAV may vary so that some degree of control may be assigned or delegated to one or more - not shown - central or decentral control units. In other examples, human control may be assigned e.g. for unplanned measures or maintenance purposes.

A first docking interface DI1 is included or mounted on an upper side of the unmanned aerial vehicle UAV. Alternatively, one or more first docking interfaces DI1 may be provided on any other location of the unmanned aerial vehicle UAV, including sidewalls or edges of the unmanned aerial vehicle UAV. The first docking interface DI1 is arranged to engage the unmanned aerial vehicle UAV with the second docking interface DI2 of the docking module DCK. Accordingly, the first docking interface DI1 may be an aforementioned counterpart docking interface of the second docking interface DI2.

The second docking interface DI2 and/or the first docking interface DI1 may comprise one or more clamps - not shown - stowed in one or more - not shown - bays. The clamps can be stowed in the bays when not in use or can simply be in an open position. When the unmanned aerial vehicle UAV lands on the docking module DCK, the clamps can be closed to secure the first docking interface DI1 of the unmanned aerial vehicle UAV to the second docking interface DI2. In other examples, the clamps can be secured over one or more skids of the unmanned aerial vehicle UAV.

Of course, different robotic units designs - e.g., wheeled instead of aerial vehicles as shown in the drawing - may require a variety of alternative docking interfaces DI1,DI2 in order to secure the robotic unit to the docking module DCK.

One or both of the docking interfaces DI1,DI2 may also comprise a magnet, such as an electromagnet. In this configuration, the electromagnet may be energized when the robotic unit - or specifically: the unmanned aerial vehicle UAV is - docked in the docking module DCK, and de-energized prior to take-off, landing, and/or when no unmanned aerial vehicle UAV is present.

In other examples, one or both of the docking interfaces DI1,DI2 may comprise a vacuum device, such as a suction cup or vacuum plate - i.e., a perforated plate in the second docking interface DI2 to exert a vacuum on a portion of the unmanned aerial vehicle UAV - to secure the unmanned aerial vehicle UAV to the second docking interfaces DI2.

In other examples one or both of the docking interfaces DI1,DI2 may include one or more slot-type hold-downs. The slot-type hold-downs can comprise opposing brackets, for example, disposed on the docking module DCM such that a slot is defined therebetween. In this manner, as the unmanned aerial vehicle UAV approaches the docking module DCM, it can fly such that skids of the first docking interface DI1 are substantially aligned with the slot. As the unmanned aerial vehicle UAV docks, therefore, the skids are inserted between the brackets and the unmanned aerial vehicle UAV substantially moves in straight and level flight, or translates, to fully engage the brackets. Because the slot is smaller than the diameter of the skids, however, the unmanned aerial vehicle UAV is secured to the docking module DCM. When docking off, the unmanned aerial vehicle UAV merely hovers slightly, backs off the docking module DCM, until it clears the brackets and then flies away normally. In some examples like the clamp-type system, the brackets can move between an open position and a closed position to decrease the accuracy required to land and engage the unmanned aerial vehicle UAV.

Unmanned aerial vehicles UAV which are destined or commanded for docking - or, in other words, engaging their first docking interface DI1 to a second docking interface DI2 - on the docking module DCK, engage autonomously with the destined docking module DCK. During or after the mechanical act of docking, several measures may be taken in order to enable the docked unmanned aerial vehicle UAV - or the docked robotic unit in general - to establish a radio access link, thereby participating in the wireless communication infrastructure system maintained in the environment ENV.

To this end, a radio access node RAN is included or mounted on a lower side of the unmanned aerial vehicle UAV. Alternatively, one or more radio access nodes RAN may be provided on any other location of the unmanned aerial vehicle UAV, including sidewalls or edges of the unmanned aerial vehicle UAV.

In some embodiments, the radio access node RAN may incorporate an entire base station - such as a NodeB, an evolved Node B (eNodeB) or other equivalent node including a gNodeB - an access point or only parts of a base station or parts of an access point.

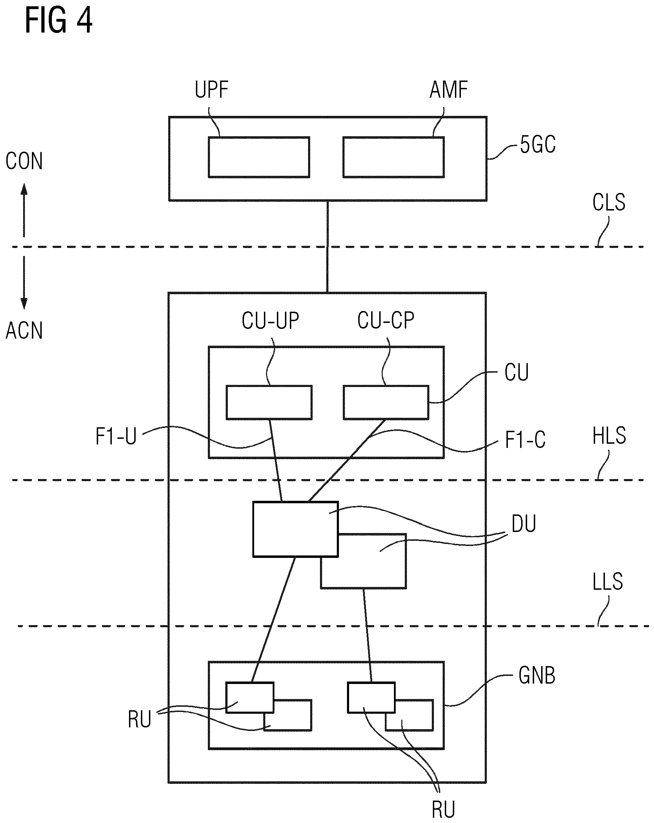

Referring to FIG. 4, in fifth generation or 5G wireless networks, the functions of a 5G base stations GNB can be split into a radio unit RU including antennas, a distributed unit DU and central unit CU. These split options - which will be described further down below - allow for various deployment architectures of the radio access network.

In some embodiments, only the radio unit RU may be implemented by the radio access node RAN of the unmanned aerial vehicle UAV. Accordingly, remaining signal processing tasks are performed by at least one distributed unit DU and/or at least one central unit CU, which may be located remotely, e.g. separately from the environment EVV, for example in a server room, aggregation point or equipment cabinet, as explained further down below.

In some embodiments, the radio unit RU and functions of a distributed unit DU may be implemented by the radio access node RAN of the unmanned aerial vehicle UAV. Accordingly, remaining signal processing tasks are performed by at least one remote central unit CU.

In some embodiments, radio unit RU, functions of a distributed unit DU and functions of a central CU may be implemented by the radio access node RAN of the unmanned aerial vehicle UAV. Accordingly, all signal processing tasks are performed by the radio access node RAN of the unmanned aerial vehicle UAV.

The skilled artisan will appreciate that there are many alternative variants of the aforementioned three embodiments for adapting split options of the upcoming 5G architecture to the needs of a specific radio coverage in a specific environment ENV. These split options - which will be described further down below - allow for various deployment architectures of the radio access network. The proposed embodiments provide for a flexible solution wherein a rapid exchange of unmanned aerial vehicle UAV units grants for rapid re-deployment from one embodiment into another without major personnel deployments or interruption of plant operations.

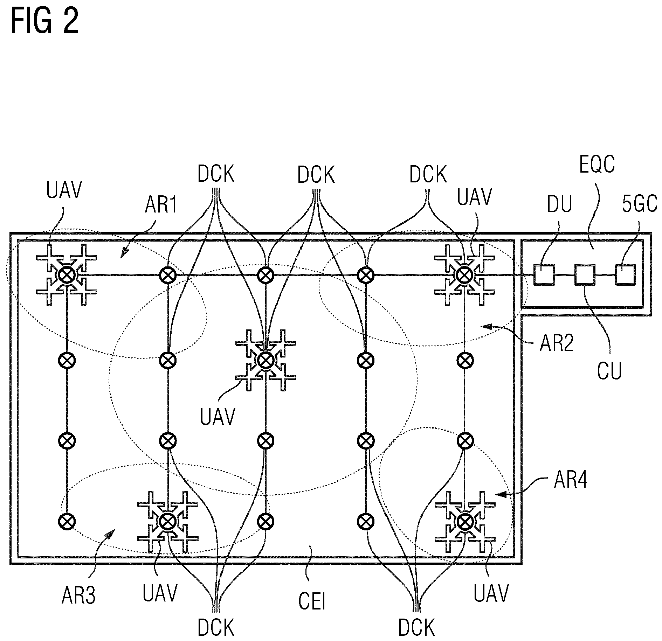

According to various embodiments, the distributed units DU and/or the central units CU may be either located in an edge site outside of the environment, e.g. located in the equipment cabinet EQC as shown in FIG. 2.

Although a choice between different split options is a critical decision in next generation wireless communication architectures, the proposed embodiments provide for a flexible solution wherein the rapid exchange of outdated robotic units by modified robotic units grants for rapid re-deployment from one choice into another without major personnel deployments or interruption of plant operations.

While or after the docking operation has concluded, optional measures for supplying electrical power to the docked unmanned aerial vehicle UAV may be taken. Although the unmanned aerial vehicle UAV may be powered by an accumulator while being deployed - e.g. while hovering - supplying electrical power to the docked unmanned aerial vehicle UAV is recommendable, since the docked mode usually lasts for a longer period of time
occupies as the deployment mode. A power source for supplying electrical power may be a power line installed along rails of the structure STR. Some or all docking modules DCK may provide electrical power connections terminating in an electrical power connector - not shown - assigned to the second docking interface DI2.

The electrical power connection between the electrical power connector assigned to the second docking interface DI2 and its - not shown - counterpart, an electrical power connector assigned to the first docking interface DI1 of the unmanned aerial vehicle UAV, may be advantageously designed by reusing mechanical components provided for the mechanical connection of said docking interfaces DI1,DI2. Such advantageously re-usable mechanical components include clamps, brackets, latches, male and female plugs etc.

The aforementioned connection measures may also be used for establishing a wire-based data transfer between the docking module DCK and the unmanned aerial vehicle UAV. Some or all docking modules DCK may provide data connections terminating in a data connector - not shown - assigned to the second docking interface DI2.

The data connectors may be configured to bidirectionally transmit data and electrical power for a docked unmanned aerial vehicle UAV or, in more general, to bidirectionally transmit data and electrical power in a state where the robotic UAV unit is engaged to the docking module DCK. A transmission of electrical power may be realized using PoE techniques (Power over Ethernet) using PoE enabled fronthaul network switches.

Alternatively, for ensuring directional flexibility, the connectors may be designed as a flexible hose containing data or/ and power lines. Connector ends of this flexible hose may be mechanically and operationally attached using magnetic force for attaching the connector and connecting the data and/or power lines.

Alternatively or additionally, power and/or data may be bidirectionally exchanged with the docked unmanned aerial vehicle UAV using wireless transfer techniques such as capacitive, inductive or optical power transfer techniques or all kinds of electromagnetic data transfer, respectively.

Alternatively or additionally, power and/or data may be bidirectionally exchanged in a peer-to-peer mode amongst docked unmanned aerial vehicles UAV whereby transmission facilities included in the structure STR may be at least partially disused during such a bidirectionally exchange in a peer-to-peer mode.

Alternatively, a millimeter wave radio link may be used for wirelessly transmitting data directly between one or more docking modules DCK and the core network. For instance, this millimeter wave radio link may be established between a distributed unit of the core network and one or more docking modules DCK. The millimeter wave radio link may be established in a state where the robotic UAV unit is engaged to the docking module DCK. The bidirectional wireless connection using this millimeter wave radio link advantageously renders a wired data link between the structure STR and one or more docking modules DCK unnecessary.

Alternatively, the millimeter wave radio link may be established between one or more unmanned aerial vehicles UAV and the core network. This bidirectional wireless connection advantageously renders a wired data link between the structure STR, one or more docking modules DCK and one or more unmanned aerial vehicle UAV unnecessary.

Alternatively, both bidirectional wireless connections described above may be established using a Free-space optical communication (FSO) instead of using a millimeter wave radio link. Free-space optical communication uses visible or non-visible light propagating in free space for wirelessly transmitting data whereby free space refers to a normal air ambience in contrast to a usage of solids such as optical fiber cables.

In summary, at least three modes of a robotic unit or unmanned aerial vehicles UAV can be distinguished:
- A deployment mode, i.e. a mode where a robotic unit is approaching its destination. The destination may be a docking module DCK, a storage point, or a maintenance point. For the case that the robotic unit is an unmanned aerial vehicle, this deployment mode would be referred to as flight mode or hovering mode.
- A docked mode, i.e. a mode where a robotic unit is mechanically engaged to the docking module DCM. This docked mode has a particular advantage of saving energy when using aerial vehicles UAV according to the proposed embodiment depicted by FIG. 1, as the aerial vehicles UAV are not required to hover at an assigned location, as suggested by numerous state of the art documents.
- A communications mode, i.e. a mode where a robotic unit is mechanically engaged to the docking module DCM and a data connection - optionally via the structure STR or wireless in the alternative - to the fronthaul distribution network is established so that the radio access node RAN of the robotic unit is able to contribute its wireless services to the wireless communication infrastructure system, e.g. wirelessly communicating with user equipment. Once docked at a docking station DCK, the robotic unit may change autonomously from docked mode into communications mode. If not yet done in advance, a docked robotic unit may be configured via the fronthaul distribution network before changing into the communications mode.

A particular advantageous data transfer between two or more docked unmanned aerial vehicles UAV may be effected using a millimeter wave small cell cellular network connection for a communications amongst two or more docked unmanned aerial vehicles UAV or amongst at least one docked unmanned aerial vehicle UAV and an unmanned aerial vehicles UAV hovering in the environment ENV or in vicinity of the structure STR.

In an embodiment, the millimeter wave small cell cellular network connection of a docked unmanned aerial vehicles UAV has a specifically formed beam pointing to a neighboring docked unmanned aerial vehicles UAV for coverage.

The mechanical engagement of the docked unmanned aerial vehicle UAV with the docking module DI2 may be configured to allow for an angular adjustment of the docked unmanned aerial vehicle UAV along a main vertical axis of the second docking interface DI2. The main vertical axis of the second docking interface DI2 may run perpendicular to the ceiling and shown by a dotted line in FIG. 1. The mechanical direction of the docked unmanned aerial vehicle UAV with respect to this vertical axis may be adjusted in adapting the angle of the main vertical axis of the docked unmanned aerial vehicle UAV along the main vertical axis of the second docking interface DI2. This angular adjustment may be effected by a movement of the robotic unit and/or movable parts - not shown - of the first docking interface DI1 and/or the of the second docking interface DI2.

This angular adjustment has the main advantage of configuring the coverage direction, controlling emission characteristics of antennas - not shown - inside the radio access node RAN of the docked unmanned aerial vehicle UAV, or for compensating a wireless coverage variability or for the purpose of beam forming.

To this end, the docked unmanned aerial vehicle UAV may be oriented at different angles in the vertical direction. An additional adjustment of the coverage area direction may be effected by panning or tilting the radio access node RAN in relation to the docked unmanned aerial vehicle UAV between different angles in the vertical direction. The ability to tilt the docked unmanned aerial vehicle UAV compensates for wireless coverage variability or for the purpose of beam forming.

Alternatively, specific unmanned aerial vehicles UAV - or robotic units in general - may be pre-shaped with a fixed angle or may have a radio access node RAN with a pre-shaped fixed angle in relation to the body of the unmanned aerial vehicles UAV in order to accommodate irregularities and/or variations from the network coverage.

FIG. 2 shows a simplified top view of a larger portion of the wireless communication infrastructure system wherein a meandering structure STR is mounted on the ceiling CEI as shown.

The environment ENV of the wireless communication infrastructure system for providing wireless access to a user equipment is, accordingly, a space underneath the ceiling CEI which accordingly extends in a perpendicular direction underneath the drawing plane of FIG. 2.

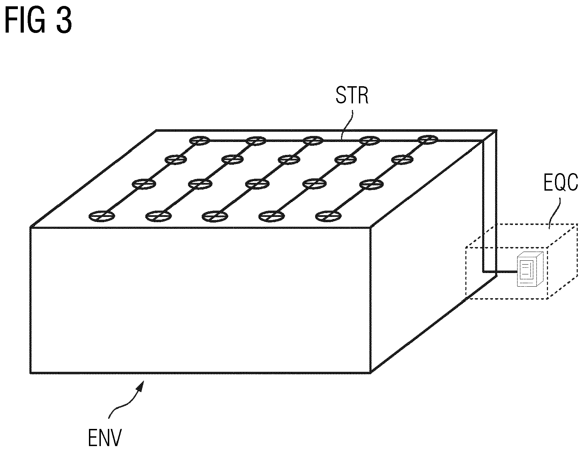

The environment ENV is shown more intuitively in the perspective and strongly simplified representation of FIG 3. The skilled artisan, however, will appreciate that there are many alternative variants in topology, shape and/or size of this structure STR, including a star topology, a tree topology or a branched bus topology.

The uniform distribution of a multiplicity of docking modules DCK within and by the structure STR as shown in FIG. 2 and FIG. 3 allows for a formation of a uniform radio coverage area, or, alternatively or additionally, a formation of one or more spots with higher radio coverage, depending on an allocation of docked unmanned aerial vehicles UAV on occupied docking modules DCK.

Apart from its mechanical effects, the structure STR may also include installation equipment for electrical power and/or data connections of the docking modules DCK. The installation may be realized by separate wireline links for each docking modules DCK or, alternatively, by a bus system or by a series of connected data switches implemented in or at some or all of the docking modules DCK. In the latter case of using data switches, one or more switchports of a local data switch installed for a particular docking module DCK may connect to switches of other docking modules DCK on the structure whereby a switchport of the local data switch is used for connecting the particular docking modules DCK itself.

Appropriate data and/or power lines - not shown - guided within the structure may advantageously terminate in a server room, a central location (e.g. server room), aggregation point or equipment cabinet EQC separated from the actual environment ENV of radio coverage provided by the wireless communication infrastructure system. As shown in FIG. 2 the equipment cabinet EQC may be disposed outside, but proximate or near, the environment ENV of radio coverage. The equipment cabinet EQC includes one or more functional units at least including a distributed unit DU, a central unit CU and a 5G-Core Unit 5GC.

By way of example, the equipment cabinet EQC including one or more of its functional units DU,CU,5GC could be mounted to the exterior of or atop of the environment ENV, situated in an equipment cabinet within the yard of the environment ENV. Some or all of the functional units DU,CU,5GC of the equipment cabinet EQC may be operably coupled to at least one of the unmanned aerial vehicles UAV via at least one docking module DCK and via the structure STR, or, alternatively, may be designed into the unmanned aerial vehicles UAV instead of being part of the equipment cabinet EQC.

In an embodiment, the equipment cabinet EQC and/or one or more of its functional units DU,CU,5GC may be connected with at least one of the transceiving unmanned aerial vehicles UAV by a data fibre, fibre bundle or data cable. Alternatively, some or all functional units DU,CU,5GC of the equipment cabinet EQC and the one of the transceiving unmanned aerial vehicles UAV may be designed into a same unit and even a same integrated circuit.

FIG. 4 shows a graphical representation of a logic layer model of a next generation wireless communication architecture. A network architecture of a wireless communication architecture may be generally separated into an access network ACN and a core network CON. The access network ACN is also referred to as fronthaul and the core network CON is also referred to as backhaul.

The core network CON is executed by 5G core functions 5GC managing all processes which are not related to radio access (e.g., mobility management, security, IP address allocation, etc.). The 5G core functions 5GC include a user plane function block UPF mainly carrying out packet forwarding between the different tunnels and an access and mobility management function block AMF handling a signaling exchanged with user equipment. A decomposition of functions executed by network nodes of previous generations led to a 5G architecture completely defined in terms of network functions being exposed as services. Accordingly, both reference signs included in the 5G core functions 5GC end with a letter »F« for »Function«.

In fifth generation or 5G wireless networks, the access network ACN consists of a set of 5G base stations GNB, called gNBs, which may be connected to the core network CON through a set of - not shown - logical interfaces. Alternatively, a functionality of a gNB base station GNB may be distributed as shown in FIG. 4. The resulting architecture is formed by a central unit CU controlling one or more distributed units DU.

A distributed unit DU is connected to a radio unit RU - also referred to as remote radio head (RRH) - which is the actual radio transceiver. The central unit CU may be further disaggregated into a control unit CU-CP for handling control plane functions and a control unit CU-UP for handling user plane functions, both of which connect to the distributed unit DU over a first interface Fl-U a second interface Fl-C respectively.

Fig. 4 shows a split layer CLS between the 5G functions executed in the access network ACN and a core network CON. In broad terms, the access network ACN is responsible for establishing, maintaining and releasing data sessions trespassing cross a radio interface.

A further split layer HLS between the distributed units DU and the central unit CU is also referred to as Higher Layer Split or »midhaul«. An interface along this split layer HLS is referred to as Fl interface comprising the aforementioned interfaces Fl-U and Fl-C respectively. As distributed units DU and central units CU are expected to be interoperable across vendors, the F1 interface introduced in 5G is expected to be a subject of further standardization.

A further split layer LLS between the Radio units RU and/or the gNB is also referred to as Lower Layer Split or »fronthaul«. A standardization of an interface along this split layer LLS is under consideration. The exemplary logical architecture as shown in FIG. 4 may be implemented and deployed in different ways.

The base station GNB may be deployed as a monolithic unit deployed at the environment - as in classic cellular networks -or distributed over and split between at least one central unit CU, at least one distributed unit DU and at least one radio unit RU.

The interface on the Higher Layer Split layer HLS, i.e. between the central unit CU and at least one distributed unit DU is more tolerant to delay. The interface on the Lower Layer Split layer LLS, i.e. between the distributed units DU and the radio units RU is more latency-sensitive and demanding on bandwidth but may offer improved radio performance across a coverage area due to coordination gain.

According to various embodiments, the distributed units DU and/or the central units CU may be either located in an edge site outside of the environment, e.g. located in the equipment cabinet EQC as shown in FIG. 2. Alternatively, the distributed units DU and/or the central units CU may be located with one or more radio units RU inside the radio access node RAN of an unmanned aerial vehicle UAV or inside the radio access node RAN of a robotic unit in general.

Although a choice between Higher Layer Splits and Lower Layer Splits is a critical decision in next generation wireless communication architectures, the proposed embodiments provide for a flexible solution wherein the rapid exchange of outdated robotic units by modified robotic units grants for rapid re-deployment from one choice into another without major personnel deployments or interruption of plant operations.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments.

For instance, while a system of docking modules for aerial robotic units is disclosed, other, e.g. wheel based robotic units could be selected without departing from the spirit of the disclosure. In addition, the location and configuration used for various features of examples of the present disclosure such as, for example, the location of antennas, the organization of wireless services distributed amongst the functional units, and the locations and configurations of the docking station can be varied according to a particular neighborhood or application that requires a slight variation due to, for example, size or construction covenants, the type of robotic units required, or weight or power constraints. Such changes are intended to be embraced within the scope of this disclosure.

It is therefore intended that the foregoing description be regarded as illustrative rather than limiting, and that it be understood that all equivalents and/or combinations of embodiments are intended to be included in this description.

## Claims

1. A wireless communication infrastructure system for providing wireless access to a user equipment in an environment, the wireless communication infrastructure system comprising:
- a structure mounted on a substantially planar surface;
- at least one robotic unit, configured to navigate at least substantially autonomously within the environment, the at least one robotic unit including a first docking interface to engage the robotic unit with a second docking interface and a radio access node for wirelessly communicating with the user equipment;
- at least one docking module being disposed on the structure, the at least one docking module providing a second docking interface configured to detachably engage the first docking interface of one of the robotic units, thereby permitting said robotic unit to be selectively engaged with and disengaged from the docking module.

2. The wireless communication infrastructure system of claim 1, comprising data connections for connecting the wireless communication infrastructure system with a core communication network.

3. The wireless communication infrastructure system of claim 2, the data connections terminating in a data connector assigned to the second docking interface.

4. The wireless communication infrastructure system of claim 3, the data connector being configured to bidirectionally transmit data and electrical power in a state where the robotic unit is engaged to the docking module.

5. The wireless communication infrastructure system of claim 1,
wherein the engagement of the robotic unit with the docking module is configured to allow for an angular adjustment of the robotic unit along a main vertical axis of the second docking interface, the angular adjustment being effected by a movement of the robotic unit.

6. The wireless communication infrastructure system of claim 1, wherein the radio access node includes a radio unit.

7. The wireless communication infrastructure system of claim 6, wherein the radio access node includes functions of a distributed unit or wherein the radio access node includes functions of a distributed unit and a central unit.

8. A method for deploying a wireless communication infrastructure system for providing wireless access to a user equipment in an environment, method including the steps of:
- providing a structure mounted on a substantially planar surface;
- providing at least one robotic unit, configured to navigate at least substantially autonomously within the environment, the at least one robotic unit including a first docking interface to engage the robotic unit with a second docking interface and a radio access node for wirelessly communicating with the user equipment;
- providing at least one docking module being disposed on the structure, the at least one docking module providing a second docking interface configured to detachably engage the first docking interface of one of the robotic units, thereby permitting said robotic unit to be selectively engaged with and disengaged from the docking module.
